# EUROPÄISCHE PATENTSCHRIFT

(11) **EP 4 217 190 B1**
(45) Veröffentlichungstag und Bekanntmachung des Hinweises auf die Patenterteilung: **31.07.2024**
(21) Anmeldenummer: 21769352.2
(22) Anmeldetag: 19.08.2021
(51) Int. Cl.: B32B 1/08, B32B 5/02, B32B 27/12, B32B 27/32, F16L 11/115, F16L 11/24, C08L 23/08, C08L 23/20, B32B 27/06, B32B 27/08

(54) **FLEXIBLE SCHLAUCHLEITUNG ZUM TRANSPORT EINES FLUIDS**
FLEXIBLE HOSE LINE FOR TRANSPORTING A FLUID
CONDUITE HYDRAULIQUE FLEXIBLE POUR TRANSPORTER UN FLUIDE

(30) Priorität: 24.09.2020 DE 102020124950
(43) Veröffentlichungstag der Anmeldung: 02.08.2023
(73) Patentinhaber: REHAU Industries SE & Co. KG, 95111 Rehau (DE)
(72) Erfinder: GAREIS, Annalena, 95355 Presseck (DE); MÜLLER, Jörg, 95028 Hof (DE); RUCKDÄSCHEL, Gerhard, 95163 Weißenstadt (DE); WAZLAWIK, Klaus, 95030 Hof (DE); ZAHN, Cornelia, 96047 Bamberg (DE)
(86) Internationale Anmeldenummer: PCT/EP2021/073085
(87) Internationale Veröffentlichungsnummer: WO 2022/063495

(56) Entgegenhaltungen:
- EP-A1- 2 410 011
- EP-A1- 2 848 849
- EP-A1- 2 873 525
- EP-A1- 3 698 961
- WO-A2-2012/134700
- CN-A- 112 500 630
- DE-U1- 20 312 108
- CAS / AMERICAN CHEMICAL SOCIETY: "Ethylene-1-octene copolymer / CAS Registry Number 26221-73-8 / Melting Point 121-124 °C / Density 0.44 g/cm3", 23 November 2021 (2021-11-23), XP002804867, Retrieved from the Internet <URL:https://commonchemistry.cas.org/detail?ref=26221-73-8> [retrieved on 20211123]

## Beschreibung

Die Erfindung betrifft eine flexible Schlauchleitung zum Transport eines Fluids, insbesondere Trinkwasser.

Schläuche für Trinkwasser wurden früher aus Weich-PVC oder Gummimaterialien hergestellt, um die gewünschte Flexibilität sicherstellen zu können. Seit geraumer Zeit kommen jedoch spezielle Polyolefin-Materialien bzw. spezielle thermoplastische Elastomere (TPE) zum Einsatz, z.B. thermoplastische Elastomere auf Styrolbasis (TPE-S). Es können weitere Rezepturkomponenten vorgesehen sein, sowie ggf. Füllstoffe und Stabilisatoren, um die Anforderungen der von der Deutschen Trinkwasserverordnung als "allgemein anerkannte Regeln der Technik" abzuleitenden Hygienestandards "technische Regel Arbeitsblatt W 270" (DIN EN 16421 - Verfahren 2) des DVGW, sowie "Leitlinie zur hygienischen Beurteilung von anorganischen Materialien im Kontakt mit Trinkwasser (KTW-Leitlinie)" des Deutschen Umweltbundesamtes zu erfüllen.

Die DE 20 2010 006 308 U1 offenbart eine Schlauchleitung mit einer Schicht aus einem thermoplastischen Elastomer auf Styrolbasis (TPE-S). Dieser Schlauch ist für die Durchleitung von Trinkwasser geeignet und erfüllt die DVGW-Richtlinien gemäß Arbeitsblatt W 270 zur Trinkwasserverordnung von 2001. TPE-S sind thermoplastische Elastomer-Compounds, die in der Regel auf eine Polypropylen-Matrix (Homopolymer, BlockCopolymer, Random-Copolymer) basieren, in die der hydrierte Styrol-Dien-BlockCopolymer-Kautschuk (z.B. SEBS, SEPS), sowie ggf. paraffinisches Weißöl, Füllstoffe und Stabilisatoren eingebettet werden. Trinkwasserkonforme Materialien müssen allerdings ölfrei sein, um die erforderlichen Hygienestandards zu erfüllen. Zur Erringung einer ausreichenden Flexibilität muss ferner der Kautschukanteil sehr hoch dosiert sein, was wirtschaftliche Nachteile hat, aber auch verarbeitungstechnisch ungünstig ist (z.B. hohe Klebrigkeit).

Die EP 2 032 352 B1 offenbart einen flexiblen Schlauch zum Transport von Nahrungsmittel-Flüssigkeiten, der eine Innenschicht aus einem TPE aufweist. Nachteilig bei diesem vorbekannten Schlauch ist allerdings, dass die TPE-Schicht aus einem vergleichsweise weichen Material besteht, dessen chemische Beständigkeit gegenüber Reinigungs- und Desinfektionsmitteln in der Regel begrenzt ist. Ferner ist die Verschmutzungsneigung aufgrund der rauen Oberfläche weicher TPE-Materialien vergleichsweise hoch. Darüber hinaus ist die geringere mechanische Stabilität einer vergleichsweise weichen TPE-Schicht während der Fertigung mittels eines Extrusionsverfahrens von Nachteil, da diese hier zum Kollabieren neigt. Ferner ist auch das weichelastische Verhalten der inneren Schlauchschicht beim Anschluss der Schlauchleitung an Anschlussarmaturen hinsichtlich der dauerhaften Dichtigkeit nachteilig.

Zudem offenbart EP 2 873 525 A1 eine Schlauchleitung zum Fluidtransport, insbesondere zum Transport von Trinkwasser

DE 203 12 108 U1 offenbart einen armierten, flexiblem Schlauch auf PVC-Basis für die Durchleitung von Trinkwasser.

Bekannt sind auch Schläuche aus vernetztem Polyethylen, wie z.B. in der DE 33 10 294 C1 dokumentiert. Bei der in dieser Schrift beschriebenen Silanvernetzung kann unter Einsatz von Silanen eine Quervernetzung von beispielsweise Polyethylen-Molekülen herbeigeführt werden. Diese Vernetzung führt beispielsweise zu einer gegenüber unvernetzten Schläuchen erhöhten thermischen Belastbarkeit. Standardmäßig werden aus vernetzbarem Material hergestellte Schläuche in großvolumigen Wärme- bzw. Feuchteaggregaten (Klimakammern oder Klimaschränke) auf vergleichsweise aufwändige Art in einen vernetzten Zustand überführt. Durch die der Vernetzung dienende Behandlung werden Gesamtvernetzungsgrade möglichst nahe 100 % des stöchiometrisch vernetzbaren Anteils angestrebt, um optimale Eigenschaften zu gewährleisten. Hierdurch wird klar, dass der Vernetzungsvorgang einen vergleichsweise aufwändigen und daher teuren Verfahrensschritt darstellt.

Vor diesem Hintergrund liegt der Erfindung die Aufgabe zugrunde, eine Schlauchleitung zum Transport eines Fluids, insbesondere Trinkwasser, anzugeben, die über eine gute Flexibilität verfügt und dabei gleichzeitig kostengünstig herstellbar ist.

Erfindungsgemäß wird diese Aufgabe gelöst durch eine flexible Schlauchleitung zum Transport eines Fluids, insbesondere Trinkwasser, mit
- einer Schicht enthaltend ein Ethylen-Octen-Copolymer
- wobei die Schicht einen Innendurchmesser von 2 bis 12 mm aufweist,
- wobei die Schicht eine Schichtdicke von 0,05 bis 0,7 mm, insbesondere 0,1 bis 0,5 mm aufweist,
- wobei an die Schicht außenseitig eine Tragschicht angrenzt,
- wobei die Schicht vorzugsweise die innerste Schicht der Schlauchleitung bildet, und
- wobei die Schlauchleitung mit einem Biegeinnenradius von 10 cm um 90 ° knickfrei biegbar ist.

Zweckmäßigerweise besteht die Schicht aus dem Ethylen-Octen-Copolymer. Die Schicht wird vorzugsweise im Extrusionsverfahren hergestellt. Insbesondere liegt es im Rahmen der Erfindung, dass die Schicht das Polymer mit der CAS Nr 26221-73-8 enthält bzw. aus diesem besteht. Die Dichte des Polymers beträgt z.B. 0,930 bis 0,942 g/cm³ und das ZugE-Modul z.B. 390 bis 660 MPa. Die Vicat-Temperatur beträgt z.B. 118 bis 126°C Die Vicat-Temperatur ist in diesem Zusammenhang die Temperatur, bei der ein Stahlstift mit definierter Geometrie unter konstanter Kraft sowie bei gleichmäßiger Steigerung der Temperatur 1 mm in die Oberfläche eines entsprechenden Kunststoff-Probekörpers eingedrungen ist. Erfindungsgemäß wurde erkannt, dass ein Material, welches üblicherweise im Bereich vergleichsweiser steifer Rohre mit verhältnismäßig großem Innendurchmesser eingesetzt wird, z.B. für Fußbodenheizungen oder Warmwasserleitungen, bei entsprechender Dimensionierung auch als Material für eine flexible Schlauchleitung verwendet werden kann. Dadurch kann beispielsweise der vorstehend beschriebene Vernetzungsprozess entfallen, was zu einer erheblichen Kosteneinsparung gegenüber vernetzten Polyethylen-Schläuchen führt. Das mit dem zu transportierenden Fluid beaufschlagte Ethylen-Octen-Copolymer hat ferner Vorteile hinsichtlich chemischer Beständigkeit und auch Verschmutzungsneigung.

Im Rahmen der Erfindung liegt es insbesondere, dass die Schicht einen Innendurchmesser von 4 bis 10 mm, insbesondere 5 bis 8 mm, und/oder eine Schichtdicke von 0,2 bis 0,4 mm aufweist. Besonders bevorzugt ist die Schlauchleitung derart gestaltet, beispielsweise über die Dimensionierung der Schicht, dass sie mit einem Biegeinnenradius von 5 cm um 90 ° knickfrei biegbar ist.

Die Tragschicht kann von einer Armierungsschicht umgeben sein. Diese ist vorzugsweise aus diagonal geflochtenen und/oder gewickelten Filamenten aufgebaut. Die Filamente können aus Fäden, insbesondere aus polymerem Material, wie z.B. Polyester und/oder Polyamid bestehen. Im Rahmen der Erfindung liegt es aber auch, dass die Filamente alternativ oder aber auch ergänzend aus Metalldrähten bestehen. Die Armierungsschicht kann offen, d.h. mit Zwischenräumen, oder aber auch geschlossen ausgebildet sein. Die Armierungsschicht ist zweckmäßigerweise außenseitig von einer Schutzschicht umgeben, die bevorzugt ebenfalls aus einem polymeren Material besteht.

Die Tragschicht weist zweckmäßigerweise eine Schichtdicke von 0,3 bis 2 mm, vorzugsweise 0,6 bis 1,5 mm auf. Die Tragschicht besteht zweckmäßigerweise ebenfalls aus einem Polymer und enthält z.B. ein thermoplastisches Elastomer (TPE), insbesondere ein thermoplastisches Elastomer auf Olefinbasis (TPO), bspw. PP/EPDM, ein thermoplastisches Styrol-Blockcopolymer (TPS), z.B. SBS, SEBS, SEPS, SEEPS oder MBS, ein thermoplastisches Polyamidelastomer (TPA), ein thermoplastisches Copolyesterelastomer (TPC) oder ein thermoplastisches Vulkanisat bzw. vernetztes thermoplastische Elastomer auf Olefinbasis, bspw. PP/EPDM (zusammengefasst TPV) bzw. z.B. PE-LD, PE-LLD oder PA. Insbesondere kann die Tragschicht aus einem der vorgenannten Materialien bestehen. Durch die vorgenannten Materialien ist eine ausreichende Gesamtflexibilität der Schlauchleitung gewährleistet. Die Schicht kann ferner eine Shore Härte D von 50 bis 62 aufweisen. Die Länge der flexiblen Schlauchleitung beträgt zweckmäßigerweise mindestens 0,5 m, insbesondere mindestens 1 m, z.B. mindestens 5 m.

Die Erfindung betrifft auch die Verwendung der vorstehend beschriebenen Schlauchleitung zum Transport von Trinkwasser, insbesondere im Sanitärbereich. Die Schlauchleitung kann hierbei z.B. als Inliner für Panzerschläuche (insbes. flexible Edelstahlschläuche) oder als Brauseschlauch bzw. Brauseeinziehschlauch ausgebildet sein. Weitere bevorzugte Einsatzzwecke der erfindungsgemäßen Schlauchleitung sind Zulaufschläuche für Zahnarztstühle und -Equipment, Zulaufschläuche für Trinkwasserspender und Getränkeanlagen, Zulaufschläuche für Kühlschränke sowie Versorgungsleitungen für Caravans und Schausteller.

Im Folgenden wird die Erfindung anhand einer lediglich ein Ausführungsbeispiel darstellenden Zeichnung erläutert. Es zeigen schematisch:
- Fig. 1: eine Seitenansicht eines Abschnittes einer erfindungsgemäßen flexiblen Schlauchleitung,
- Fig. 2: einen Querschnitt durch die in Fig. 1 dargestellten Schlauchleitung,
- Fig. 3: eine weitere Ausführungsform der Erfindung in einer der Fig. 2 entsprechenden Darstellung und
- Fig. 4: der in Fig. 1 dargestellte Schlauchleitungsabschnitt in einem gebogenen Zustand.

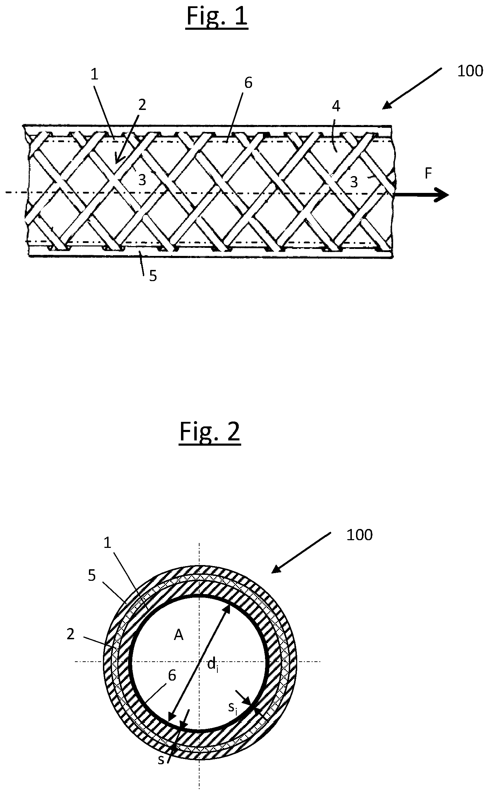

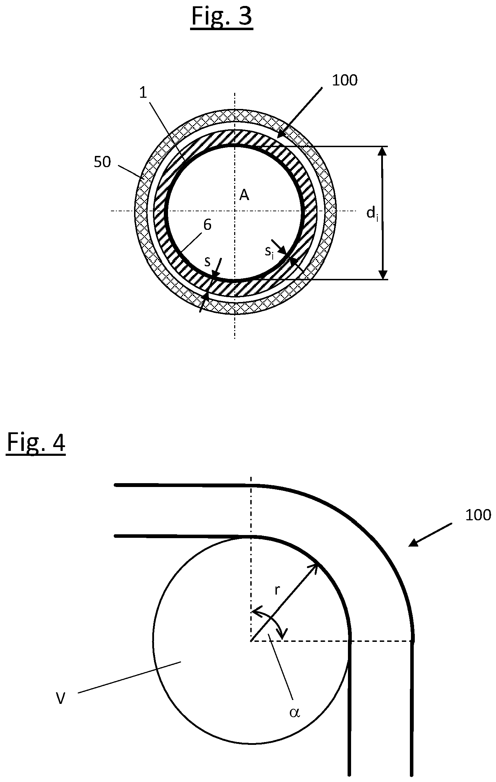

Die Fig. 1 zeigt eine Seitenansicht von einem Längsabschnitt einer erfindungsgemäßen Schlauchleitung 100 zum Transport eines Fluids F, insbesondere Trinkwasser. Die Schlauchleitung 100 besitzt eine Mindestlänge von 0,5 m und weist eine extrudierte Schicht 6 auf, welche aus einem Ethylen-Octen-Copolymer besteht. Wie der Fig. 2 zu entnehmen ist, weist die mit dem Fluid F beaufschlagte und somit als Innenschicht der Schlauchleitung 100 ausgebildete Schicht 6 einen Innendurchmesser dᵢ von 5 bis 8 mm auf, welcher der freien Strömungsquerschnitt A der Schlauchleitung 100 definiert. Die Schichtdicke sᵢ der Schicht 6 beträgt 0,2 bis 0,4 mm. Anhand einer vergleichenden Betrachtung mit der Fig. 4 ist erkennbar, dass die Schlauchleitung 100 derart flexibel ist, dass sie mit einem Biegeinnenradius von r = 5 cm um 90 ° knickfrei biegbar ist. Der Biegeinnenradius r wird definiert durch die gestauchte Außenoberfläche der gekrümmten Schlauchleitung 100 und die geforderte Flexibilität der Schlauchleitung 100 kann entsprechend beispielsweise dadurch überprüft werden, dass die Schlauchleitung 100 in einem rechten Winkel um eine zylindrische Vorrichtung V mit einem Außenradius r herum gelegt wird.

Im Ausführungsbeispiel besteht die Schicht 6 aus dem Polymer mit der CAS Nr 26221-73-8. Die Dichte dieses Polymers beträgt im Ausführungsbeispiel 0,935 g/cm³ und das Zug-E-Modul 500 MPa, während die Vicat-Temperatur beträgt 122 °C beträgt. Die Schicht 6 weist ferner eine Shore Härte D von 56 auf. Anhand einer vergleichenden Betrachtung der Fig. 1 und 2 ist erkennbar, dass die Schicht 6 von einer Tragschicht 1 und diese wiederum von einer Armierungsschicht 2 umgeben ist. Die Armierungsschicht 2 ist aus diagonal geflochtenen Filamenten 3 aufgebaut. Die Filamente 3 können aus Fäden, insbesondere aus polymerem Material, wie z.B. Polyester und/oder Polyamid oder aber auch aus Metalldrähten bestehen. Im Ausführungsbeispiel ist die Armierungsschicht 2 offen, d.h. mit Zwischenräumen 4 ausgebildet. Ebenso kann die Armierungsschicht 2 durch eine entsprechend dichte Flechtung aber auch geschlossen ausgebildet sein, so dass keine Zwischenräume entstehen. Die Armierungsschicht 2 ist außenseitig von einer Schutzschicht 5 umgeben, die ebenfalls aus einem polymeren Material besteht, z.B. aus demselben Material wie die Schicht 6 oder die Tragschicht 1. Die an die Schicht 6 außenseitig anschließende Tragschicht 1 weist eine Schichtdicke s von 1,0 bis 1,3 mm auf. Die Tragschicht 1 besteht aus einem anderen Polymer als die Schicht 6, z.B. einem thermoplastischen Elastomer (TPE), beispielsweise einem TPO.

Beim Ausführungsbeispiel gemäß Fig. 3 besteht die Schlauchleitung 100 lediglich aus der Schicht 6 sowie der Tragschicht 1. Es ist erkennbar, dass die Schlauchleitung 100 in diesem Ausführungsbeispiel in einen Panzerschlauch 50 eingezogen ist.

Die in den Ausführungsbeispielen beschriebene Schlauchleitung 100 wird insbesondere im Sanitärbereich eingesetzt, z.B. als Inliner für Panzerschläuche 50 (s. Fig. 4) oder als Brauseschlauch bzw. Brauseeinziehschlauch ausgebildet sein. Weitere bevorzugte Einsatzzwecke der Schlauchleitung sind Zulaufschläuche für Zahnarztstühle und -Equipment, Zulaufschläuche für Trinkwasserspender und Getränkeanlagen. Alternativ kann die erfindungsgemäße Schlauchleitung 100 auch als Zulaufschlauch für Kühlschränke sowie als Versorgungsleitung für Caravans und/oder Schausteller eingesetzt werden.

## Patentansprüche

1. Flexible Schlauchleitung (100) zum Transport eines Fluids (F), insbesondere Trinkwasser, mit
- einer Schicht (6) enthaltend ein Ethylen-Octen-Copolymer,
- wobei die Schicht (6) einen Innendurchmesser (dᵢ) von 2 bis 12 mm aufweist,
- wobei die Schicht (6) eine Schichtdicke (sᵢ) von 0,05 bis 0,7 mm, insbesondere 0,1 bis 0,5 mm aufweist,
- wobei an die Schicht (6) außenseitig eine Tragschicht (1) angrenzt,
- wobei die Schicht (6) vorzugsweise die innerste Schicht der Schlauchleitung (100) bildet, und
- wobei die Schlauchleitung (100) mit einem Biegeinnenradius (r) von 10 cm um 90 ° knickfrei biegbar ist.

2. Schlauchleitung (100) nach Anspruch 1, **dadurch gekennzeichnet, dass** die Schicht (6) aus dem Ethylen-Octen-Copolymer besteht.

3. Schlauchleitung (100) nach Anspruch 1 oder 2, **dadurch gekennzeichnet, dass** die Schicht (6) einen Innendurchmesser (dᵢ) von 4 bis 10 mm, insbesondere 5 bis 8 mm, und/oder eine Schichtdicke (sᵢ) von 0,2 bis 0,4 mm aufweist.

4. Schlauchleitung (100) nach einem der Ansprüche 1 bis 3, **dadurch gekennzeichnet, dass** sie mit einem Biegeinnenradius (r) von 5 cm um 90 ° knickfrei biegbar ist.

5. Schlauchleitung (100) nach einem der Ansprüche 1 bis 4, **dadurch gekennzeichnet, dass** die Tragschicht (1) von einer Armierungsschicht (2) umgeben ist, die vorzugsweise aus diagonal geflochtenen und/oder gewickelten Filamenten aufgebaut ist.

6. Schlauchleitung (100) nach einem der Ansprüche 1 bis 5, **dadurch gekennzeichnet, dass** die Tragschicht (1) eine Schichtdicke (s) von 0,3 bis 2 mm, vorzugweise 0,6 bis 1,5 mm aufweist.

7. Schlauchleitung (100) nach einem der Ansprüche 1 bis 6, **dadurch gekennzeichnet, dass** die Tragschicht (1) ein thermoplastisches Elastomer, insbesondere ein TPO, ein TPS, ein TPA, ein TPC oder ein TPV, ein PE-LD, ein PE-LLD oder ein PA enthält bzw. aus einem der vorgenannten Materialien besteht.

8. Schlauchleitung (100) nach einem der Ansprüche 1 bis 7, **dadurch gekennzeichnet, dass** die Schicht (6) eine Shore Härte D von 50 bis 62 aufweist.

9. Verwendung einer Schlauchleitung (100) nach einem der Ansprüche 1 bis 8 zum Transport von Trinkwasser, insbesondere im Sanitärbereich.

## Claims

1. Flexible hose line (100) for transporting a fluid (F), in particular drinking water, comprising
- a layer (6) containing an ethylene-octene copolymer,
- wherein the layer (6) has an internal diameter (dᵢ) of 2 to 12 mm,
- wherein the layer (6) has a layer thickness (sᵢ) of 0.05 to 0.7 mm, in particular 0.1 to 0.5 mm,
- wherein a supporting layer (1) adjoins the layer (6) on the outside,
- wherein the layer (6) preferably forms the innermost layer of the hose line (100), and
- wherein the hose line (100) is bendable, with an inner bending radius (r) of 10 cm, by 90° without kinking.

2. Hose line (100) according to claim 1, **characterised in that** the layer (6) consists of the ethylene-octene copolymer.

3. Hose line (100) according to claim 1 or 2, **characterised in that** the layer (6) has an internal diameter (dᵢ) of 4 to 10 mm, in particular 5 to 8 mm, and/or a layer thickness (sᵢ) of 0.2 to 0.4 mm.

4. Hose line (100) according to any of claims 1 to 3, **characterised in that** it is bendable, with an inner bending radius (r) of 5 cm, by 90° without kinking.

5. Hose line (100) according to any of claims 1 to 4, **characterised in that** the supporting layer (1) is surrounded by a reinforcing layer (2), which is preferably constructed from diagonally braided and/or wound filaments.

6. Hose line (100) according to any of claims 1 to 5, **characterised in that** the supporting layer (1) has a layer thickness (s) of 0.3 to 2 mm, preferably 0.6 to 1.5 mm.

7. Hose line (100) according to any of claims 1 to 6, **characterised in that** the supporting layer (1) contains a thermoplastic elastomer, in particular a TPO, a TPS, a TPA, a TPC or a TPV, an LDPE, an LLDPE or a PA or consists of one of the above-mentioned materials.

8. Hose line (100) according to any of claims 1 to 7, **characterised in that** the layer (6) has a Shore hardness D of 50 to 62.

9. Use of a hose line (100) according to any of claims 1 to 8 for transporting drinking water, in particular in the sanitary sector.

## Revendications

1. Conduite souple flexible (100) destinée au transport d'un fluide (F), en particulier d'eau potable, comportant
- une couche (6) contenant un copolymère d'éthylène et d'octène,
- la couche (6) présentant un diamètre interne (dᵢ) de 2 à 12 mm,
- la couche (6) présentant une épaisseur de couche (sᵢ) de 0,05 à 0,7 mm, en particulier de 0,1 à 0,5 mm,
- une couche de support (1) étant adjacente à la couche (6) sur le côté extérieur de celle-ci,
- la couche (6) formant de préférence la couche la plus à l'intérieur de la conduite souple (100), et
- la conduite souple (100) pouvant être courbée à 90° sans former de pli avec un rayon intérieur de courbure (r) de 10 cm.

2. Conduite souple (100) selon la revendication 1, **caractérisée en ce que** la couche (6) est constituée du copolymère d'éthylène et d'octène.

3. Conduite souple (100) selon la revendication 1 ou 2, **caractérisée en ce que** la couche (6) présente un diamètre interne (dᵢ) de 4 à 10 mm, en particulier de 5 à 8 mm et/ou une épaisseur de couche (sᵢ) de 0,2 à 0,4 mm.

4. Conduite souple (100) selon l'une des revendications 1 à 3, **caractérisée en ce qu'**elle peut être courbée à 90° sans former de pli avec un rayon intérieur de courbure (r) de 5 cm.

5. Conduite souple (100) selon l'une des revendications 1 à 4, **caractérisée en ce que** la couche de support (1) est entourée d'une couche de renforcement (2) qui est de préférence constituée de filaments tressés et/ou enroulés en diagonale.

6. Conduite souple (100) selon l'une des revendications 1 à 5, **caractérisée en ce que** la couche de support (1) présente une épaisseur de couche (s) de 0,3 à 2 mm, de préférence de 0,6 à 1,5 mm.

7. Conduite souple (100) selon l'une des revendications 1 à 6, **caractérisée en ce que** la couche de support (1) contient un élastomère thermoplastique, en particulier un TPO, un TPS, un TPA, un TPC ou un TPV, un PE-LD, un PE-LLD ou un PA ou se compose de l'un des matériaux susnommés.

8. Conduite souple (100) selon l'une des revendications 1 à 7, **caractérisée en ce que** la couche (6) présente une dureté Shore D de 50 à 62.

9. Utilisation d'une conduite souple (100) selon l'une des revendications 1 à 8 pour le transport d'eau potable, en particulier dans le secteur sanitaire.
